(19) **Europäisches Patentamt**
**European Patent Office**
**Office européen des brevets**

(11) Veröffentlichungsnummer: **0 175 908 B1**

(12) **EUROPÄISCHE PATENTSCHRIFT**

(45) Veröffentlichungstag der Patentschrift: **21.08.91**

(51) Int. Cl.⁵: **B29B 9/06**, C08J 3/12, C08L 77/00

(21) Anmeldenummer: **85110190.7**

(22) Anmeldetag: **14.08.85**

(54) **Verfahren zur Herstellung von Polyamidformkörpern.**

(30) Priorität: **25.08.84 DE 3431271**

(43) Veröffentlichungstag der Anmeldung:
**02.04.86 Patentblatt 86/14**

(45) Bekanntmachung des Hinweises auf die
Patenterteilung:
**21.08.91 Patentblatt 91/34**

(84) Benannte Vertragsstaaten:
**DE FR GB IT**

(56) Entgegenhaltungen:
**DE-C- 714 708**

**DERWENT JAPANESE PATENTS REPORT,
Woche 21, Jahr 1975, Derwent Publications,
Derwent-Zusammenfassung Nr. 35232W; &
JP-B-50 10 906 (TOYO SPINNING K.K.)
25-04-1975**

**R. VIEWEG et al.: "Kunststoff-Handbuch",
"Polyamide", Band VI, 1966, Seiten 244-245,
Carl Hanser Verlag, München, DE**

**Kunststoff-Handbuch "Polyamide". VI C.
Hauser Verlag 1966 S 129-137**

(73) Patentinhaber: **BAYER AG**

**W-5090 Leverkusen 1 Bayerwerk(DE)**

(72) Erfinder: **Fritsch, Karl Herbert, Dr.
Hackberg 25
W-5060 Bergisch Gladbach(DE)**
Erfinder: **Bier, Peter, Dr.
Bodelschwinghstrasse 18
W-4150 Krefeld(DE)**

## Beschreibung

Die Erfindung betrifft ein Verfahren zur Herstellung von Polyamid-6-Formkörpern mit sehr guten mechanischen Werten, indem man extrudierte Polyamid-6-Stränge längsverstreckt, granuliert und aus diesem Granulat durch Spritzgießen Formkörper erzeugt, wobei beim Verspritzen die Temperatur über dem Erweichungspunkt des zu verspritzenden Polyamid-6 liegt, und 250 bis 280°C beträgt.

Bekanntlich wird Polyamid-6 aufgrund seiner ausgezeichneten physikalischen Eigenschaften auf vielen Gebieten eingesetzt, z.B. als Faser, Folie oder Spritzgußformteil. Davon zeigen insbesondere Spritzgußformkörper keine ausreichenden Festigkeitswerte, so daß es ein Ziel der vorliegenden Erfindung ist, ein Verfahren bereitzustellen, mit dem es gelingt, ohne wesentliche Variation des Spritzgußverfahrens Formteile mit höherem mechanischen Niveau, insbesondere höheren Festigkeitseigenschaften herzustellen. Dabei sollte das Verfahren technisch einfach und kostengünstig sein.

Aus der DE-C 714 708 ist ein Verfahren zur Herstellung von Polyamidformkörpern bekannt, bei dem man eine Polyamidschmelze durch Düsen zu Strängen preßt, diese Polyamide in vororientierter Form bei niederen Temperaturen granuliert und dann bei Temperaturen unterhalb ihres Schmelzpunkts, bei denen jedoch die einzelnen Teilchen des Spritzgußmaterials völlig verschweißt werden, insbesondere 10°C bis 60°C unterhalb des Schmelzpunktes, verspritzt und vorzugsweise während des Spritzgußvorgangs für eine weitere Orientierung sorgt.

Gegenstand der Erfindung sind Verfahren zur Herstellung von Polyamid-6-Formkörpern mit erhöhter Festigkeit durch Verspritzen vororientierter Polyamide, dadurch gekennzeichnet, daß man die Polyamid-6-Schmelze durch Düsen zu Strängen preßt, die bei Temperaturen im Bereich von 25°C bis zu dem Polyamiderweichungspunkt, vorzugsweise von 80°C bis 20°C unterhalb des genannten Erweichungspunktes, im Verhältnis 1 : 1,5 bis 1 : 8, vorzugsweise < 1 : 5, gereckt und granuliert werden und das Granulat in bekannter Weise zu Spritzgußkörpern verarbeitet wird, wobei beim Verspritzen die Temperatur 250 bis 280°C beträgt.

Als Polyamid eignet sich das teilkristalline Polyamid-6.

Das Polyamid-6 soll vorzugsweise eine relative Viskosität (gemessen an einer 1 gew.-%igen Lösung in m-Kresol bei 25°C) von 2,0 bis 5,0, besonders bevorzugt von 2,5 bis 4,5 aufweisen.

Als Keimbildner, Gleit-, Schmier- und Entformungsmittel können alle dem Fachmann bekannten Substanzen verwendet werden, wie sie z.B. in Vieweg/Müller "Polyamide", Carl-Hanser-Verlag, S. 244 - 245 beschrieben sind. Besonders geeignete Nukleiermittel sind Mikrotalk und feinkörniges Polyamidpulver, das höher als das zu verarbeitende Polyamid schmilzt.

Weiterhin kann das Polyamid-6 zusätzlich übliche Additive wie Stabilisatoren, Weichmachungsmittel, Füll- und Verstärkungsstoffe sowie Farbstoffe enthalten. Vorzugsweise enthält das Polyamid-6 Nukleier- und Entformungsmittel wie Amidwachse.

Als Reckanlagen kommen Anlagen in Frage, wie sie z.B. bei Vieweg/Müller "Polyamide", Carl-Hanser-Verlag, S. 336 - 343 beschrieben sind. Dabei soll die vorliegende Erfindung auch geringe Modifikationen des Walzen-bzw. Ziehdüsenreckverfahrens umfassen. Zur Herstellung der Polyamidstränge kommen bevorzugt Spinnpumpen (z.B. Zahnradpumpe nach VK-Rohr) oder Mischextruder (Einwellen- oder Zweiwellenmaschinen) in Frage. Dabei wird das Polyamid durch Düsen von 1 - 8 mm gepreßt.

Der gereckte Strang wird mit üblichen Granulatoren zu Kleingranulat mit einer mittleren Länge von 1 mm granuliert. Das Verspritzen kann z.B. auf Standard-Spritzgußmaschinen, wie sie für Polyamid benutzt werden, erfolgen. Dabei sollte die Temperatur 280°C, vorzugsweise 260°C, nicht überschreiten, über dem Erweichungspunkt des zu verarbeitenden Polyamids liegen, und 250 bis 280°C betragen.

Beispiel

Polyamid-6 mit einer relativen Viskosität von 3,15, gemessen an einer 1 %igen Lösung in m-Kresol bei 25°C in einem Ubbelohe Viskosimeter, wurde in einem Zweiwellenextruder des Typs ZSK 30 der Fa. Werner & Pfleiderer aufgeschmolzen und durch eine 4 mm Runddüse extrudiert. Die Produkttemperatur betrug 275°C. Der Schmelzestrang wurde in einem Wasserbad abgekühlt und in einer Reckanlage nach dem Walzenreckverfahren gereckt. Die Reckanlage bestand aus drei chromierten senkrecht aufeinanderstehenden Walzenpaaren mit einem Walzendurchmesser von 25 cm. Die Walzenpaare können separat angetrieben werden. Der Strang wird durch zwei Heizzonen, die zwischen den Walzenpaaren liegen, geführt. Die Temperatur der Heizzonen kann von 25°C bis 300°C eingestellt werden. Im vorliegenden Fall wurde die Umfangsgeschwindigkeit zwischen dem ersten Walzenpaar und dem zweiten so gewählt, daß ein Reckverhältnis von 1 : 3,5 resultierte. Die Temperatur der Heizzonen betrug 100 bzw. 147°C. Das dritte Walzenpaar wurde ausschließlich zum Transport des Stranges benutzt. Der Strang wurde mit einem Granulator granuliert und das Granulat auf einer Spritzgußmaschine bei 250°C zu Prüfkörpern verspritzt. Die daran gemessene Reißfestigkeit und Reißdehnung (DIN 53 455) ist in Tabelle 1 mit der der ungereckten Ausgangsprobe für ein Polyamid-6 mit und ohne Nukleier- und Entformungsmittel verglichen.

Tabelle 1

| Beispiel | Produkt | Reckbedingung | | Reißfestigkeit DIN (MPa) | Reißdehnung |
| | | Temperatur (°C) | Reckverhältnis | | |
|---|---|---|---|---|---|
| 1 | Polyamid-6 | 147 | 1 : 3,5 | 66,3 | 269 |
| 2 | Polyamid-6* | 100 | 1 : 3,6 | 67,5 | 248 |
| 3 | Polyamid-6 | – | – | 56,1 | 223 |
| 4 | Polyamid-6* | – | – | 57,5 | 176 |

* enthält zusätzlich 0,05 Gew.-% Mikrotalk und 0,5 Gew.-% Amidwachs

3

**Patentansprüche**

1. Verfahren zur Herstellung von Polyamid-6-Form-körpern durch Verspritzen vororientierter Polyamide, dadurch gekennzeichnet, daß man eine Polyamidschmelze durch Düsen zu Strängen preßt, die bei Temperaturen von 25°C bis zu dem Polyamiderweichungspunkt im Verhältnis 1 : 1,5 bis 1 : 8 gereckt und granuliert werden und das Granulat in bekannter Weise zu Spritzgußkörpern verarbeitet wird und beim Verspritzen die Temperatur 250 bis 280°C, vorzugsweise 260°C, beträgt.

2. Verfahren nach Anspruch 1, dadurch gekennzeichnet, daß das Reckverhältnis < 1 : 5 ist.

3. Verfahren nach Anspruch 1 oder 2, dadurch gekennzeichnet, daß die Reckung bei Temperaturen von 20 - 80 °C unterhalb des Erweichungspunktes des Polyamids durchgeführt wird.

4. Verfahren nach Ansprüchen 1 bis 3, dadurch gekennzeichnet, daß das Polyamid noch Nukleier- und Entformungsmittel enthält.

5. Verfahren nach Anspruch 4, dadurch gekennzeichnet, daß das Polyamid Mikrotalk oder feinkörniges Polyamidpulver und Amidwachse enthält.

**Claims**

1. A process for the production of polyamide-6 mouldings by extrusion of pre-oriented polyamides, characterized in that a polyamide melt is extruded through nozzles to form strands which are stretched in a ratio of 1 : 1.5 to 1 : 8 at temperatures of 25 °C up to the melting point of the polyamide and then granulated, the granules obtained are processed in known manner to injection-moulded articles and the temperature during extrusion is 250 to 280 °C, preferably 260 °C.

2. A process as claimed in claim 1, characterized in that the stretching ratio is < 1 : 5.

3. A process as claimed in claim 1 or 2, characterized in that stretching is carried out at temperatures from 20 to 80 °C below the softening point of the polyamide.

4. A process as claimed in claims 1 to 3, characterized in that the polyamide contains nucleating agents and mould release agents.

5. A process as claimed in claim 4, characterized in that the polyamide contains microtalcum or fine-particle polyamide powder and amide waxes.

**Revendications**

1. Procédé de production de pièces moulées en polyamide-6 par injection de polyamides pré-orientés, caractérisé en ce qu'on presse une masse fondue de polyamide à travers des filières en boudins que l'on étire à des températures allant de 25 °C jusqu'au point de ramollissement du polyamide dans le rapport de 1:1,5 à 1:8 et que l'on transforme en granules, et on transforme les granules d'une manière connue en pièces moulées par injection, la température lors de l'injection s'élevant à 250-280 °C, de préférence a 260 °C.

2. Procédé suivant la revendication 1, caractérisé en ce que le rapport d'étirage est inférieur à 1:5.

3. Procédé suivant la revendication 1 ou 2, caractérisé en ce que l'étirage est effectué à des températures de 20 à 80 °C au-dessous du point de ramollissement du polyamide.

4. Procédé suivant les revendications 1 à 3, caractérisé en ce que le polyamide contient en outre des agents de nucléation et des agents de démoulage.

5. Procédé suivant la revendication 4, caractérisé en ce que le polyamide contient du talc en particules microscopiques ou un polyamide en poudre à grains fins et des cires amidiques.